# FASCICULE DE BREVET EUROPEEN

(11) **EP 1 661 758 B1**
(45) Date de publication et mention de la délivrance du brevet: **28.01.2009**
(21) Numéro de dépôt: 05380257.5
(22) Date de dépôt: 24.11.2005
(51) Int. Cl.: B60P 7/15, B60P 7/08

(54) **Dispositif pour l'arrimage de cargaisons a l'intérieur de conteneurs**
Anordnung zum Stauen einer Ladung im Innenraum eines Containers
Device for stowing loads at the interior of containers

(30) Priorité: 24.11.2004 ES 200402682 U
(43) Date de publication de la demande: 31.05.2006
(73) Titulaire: Industrias Ponsa, S.A., 08243 Manresa (Barcelona) (ES)
(72) Inventeur: Ponsa Bosch, Juan, 08243 Manresa (Barcelona) (ES)
(74) Mandataire: Ungria Lopez, Javier

(56) Documents cités:
- EP-A- 1 182 082
- EP-A- 1 413 479
- DE-A1- 10 218 465
- GB-A- 2 003 837

## Description

La présente invention fait référence à un dispositif conçu et prévu pour l'arrimage adéquat des cargaisons à l'intérieur de conteneurs, notamment des colis, paquets et objets similaires, et en particulier lorsque la charge n'occupe pas la totalité de l'espace disponible dans le conteneur.

Depuis un certain temps, la logistique est en train de se développer convenablement, grâce à l'implantation, en tant qu'élément de base du transport intermodal, du réceptacle connu comme conteneur, qui est un élément normalisé en ce qui concerne ses dimensions et ses éléments de manutention et d'emboîtement permettant son installation sur des plateformes mobiles, tant sur des trains que sur des camions, en les fixant avec une totale sécurité et de façon immédiate ou bien en les arrimant aux endroits déterminés des navires qui sont de nos jours consacrés de façon exclusive au transport des conteneurs, et qui sont génétiquement désignés comme "porte-conteneurs", par le biais d'arrimages d'une hauteur considérable qui sont fixés les uns aux autres de façon à offrir une garantie d'immobilité totale face à des secousses plus ou moins brusques.

Cependant, tant au cours du transport simple, unitaire, d'un conteneur que pendant son arrimage, les problèmes surgissent lorsque l'occupation du conteneur n'est pas totale, et les colis, paquets et objets similaires y installés peuvent se déplacer accidentellement d'un côté à un autre, ce qui peut entraîner le déplacement des cargaisons, qui est à l'origine d'un accident très fréquent, en particulier dans le transport par route.

Les dispositifs existant actuellement permettent la fixation des cargaisons sur un plan incliné et en forme de X, vu que les conteneurs sont uniquement munis dans leur intérieur de points d'amarrage situés sur leurs angles supérieur et inférieur.

### ÉTAT DE LA TECHNIQUE

On connaît par le brevet GB-A-2 003 887 (British Petroleum Co. Ltd.) un dispositif pour l'arrimage, en particulier de bidons qui utilise des bandes qui sont fixées dans les parois perforées à certains endroits du conteneur pour que pénètrent lesdites bandes et qui présente des paires de poulies qui guident les bandes répétées. La complexité de l'installation des poulies et le fait d'ouvrir des fenêtres dans les parois compliquent le système.

On connaît également par le document DE 102 18 465 A1 (Verzinkerei Rentrop GmbH) un autre dispositif qui utilise aussi l'intégration de poulies et de crochets pour des bandes qui fixent le contenu dans une seule direction vers le bas. Son installation est également complexe.

### OBJET DE L'INVENTION

Le dispositif qui fait l'objet de la présente invention réunit une série de nouveautés très particulières qui permettent d'offrir au transporteur, et plus généralement à l'utilisateur, un élément qui va permettre de fixer avec une totale sûreté les objets conformant lesdites cargaisons incomplètes, fixation qui sera assuré de façon simple et rapide.

Afin de décrire avec le plus de détail possible les caractéristiques du dispositif qui fait l'objet de la présente invention, en décrivant également la totalité de ses composants, les dessins qui représentent, à titre d'exemple non limitatif, le dispositif dont il est fait mention, sont annexés au présent mémoire descriptif.

Sur ces dessins,
La fig. 1 est une vue de profil d'une partie du ruban qui va constituer la bande latérale de fixation;
La fig. 2 est une vue en perspective d'une section du ruban, identique à celle de la fig. précédente, mais plus courte et à une plus grande échelle;
La fig. 3 représente la bande latérale installée à sa place correcte à l'intérieur de la paroi du conteneur;
La fig. 4 montre, en perspective, la fixation de la partie supérieure du ruban formant la bande latérale sur l'ancrage supérieur par le biais d'un mousqueton d'accrochage;
La fig. 5, de façon similaire à la figure précédente, montre en perspective la façon dont s'accroche l'extrémité inférieure du ruban sur l'ancrage inférieur;
La fig. 6 montre une variante de la réalisation du ruban, qui est accroché sur l'ancrage inférieur à l'aide d'un crochet;
La fig.7 est un détail schématisé de l'installation de l'un des "cliquets" entre deux bandes latérales opposées;
La fig. 8 représente un détail de l'installation et de l'accrochage du "cliquet" à la place adéquate de la bande latérale de fixation;
Finalement, la fig. 9 est une représentation demi-schématisée d'un conteneur équipé de bandes latérales et des "cliquets" qui fixent une cargaison qui n'occupe pas la totalité de l'espace du conteneur.

Conformément aux dessins indiqués, le dispositif pour l'arrimage de cargaisons à l'intérieur des conteneurs qui fait l'objet de la présente invention, consiste essentiellement en une série de bandes latérales (1), constituées par un double ruban (2) et (2a), les deux parties étant unies entre elles sur toute leur longueur à l'exception de quelques petites sections, de préférence équidistantes, qui conforment les oeillets ou tunnels (3). Les extrémités des bandes latérales seront, de préférence, arrondies (1a) afin de rendre plus facile leur manipulation pour leur fixation aux composants correspondants.

Ces rubans (2) et (2a) sont faits d'un matériel très résistant à la traction et à l'usure, ainsi qu'à l'action d'agents externes susceptibles de les détériorer rapidement et de diminuer leur résistance.

Chacune des bandes latérales (1) sera placée dans le sens vertical et dûment fixée aux ancrages en forme de poignée (4) et (4a), situés respectivement sur la partie supérieur et inférieure, juste sur les extrémités, de la zone rentrante (5) de la tôle ondulée (6) qui conforme les parois latérales du conteneur (7).

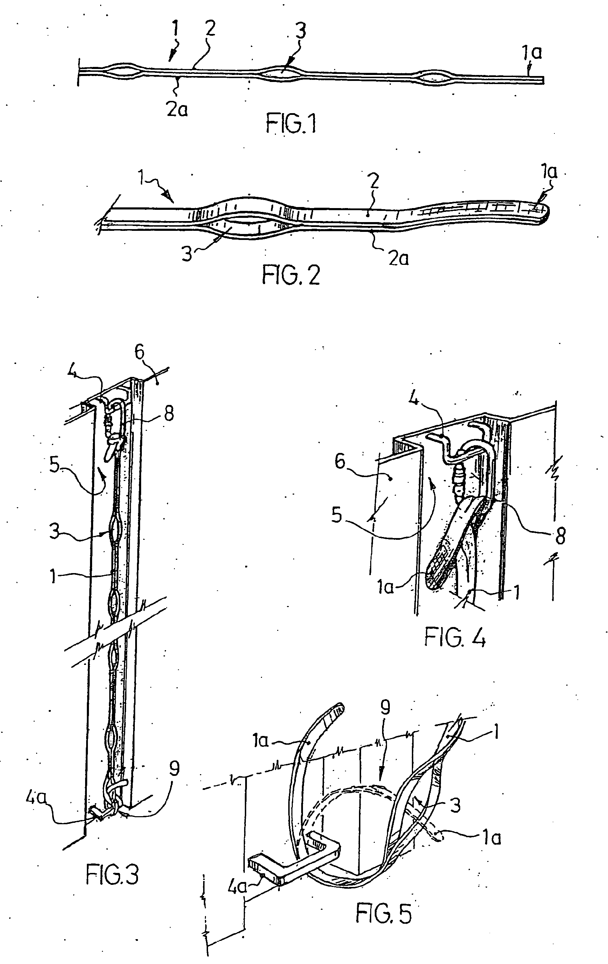

La partie supérieure de la bande latérale (1) est nouée, selon la fig.4, autour d'un mousqueton (8), lequel a été, à son tour, dûment accroché, grâce au classique et particulier fonctionnement de cet objet si connu, autour de l'ancrage supérieur (4).

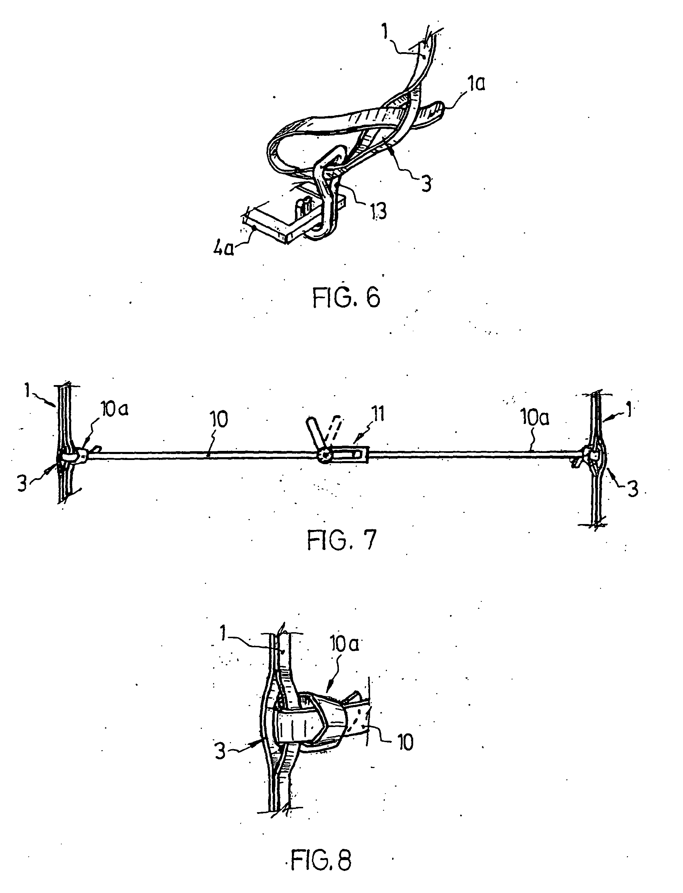

Par l'autre extrémité, l'inférieure, la bande latérale (1) est nouée, tel qu'il est montré aux figures 5 et 6, autour de l'ancrage inférieur (4a), au moment ou la bande (1) est définitivement placée à sa place. Ce noeud inférieur est désigné avec la référence (9).

Comme on peut déduire de la description précédente, à l'intérieur du conteneur on peut placer plusieurs bandes latérales (1), d'accord avec les groupes d'ancrages (4) et (4a) que l'on aurait installés dans les parties rentrantes correspondantes (5) des parois latérales du conteneur (7). Le nombre de bandes (1) sera, tel qu'il a été indiqué, variable et dépendra du type de cargaison et du nombre de colis à arrimer et fixer.

Le dispositif est complété avec les rubans transversaux, dénommés "cliquets" (10), représentés sur les figs. 7 y 9.

Ces "cliquets" (10), sont également constitués par des rubans d'un matériel très résistant à la traction et à l'usure, comme les rubans employés pour la confection des bandes latérales (1).

Dans la partie centrale de la longueur du "cliquet" (10) est placé un tendeur (11), dont l'objet est d'exercer une forte traction sur la totalité dudit "cliquet" (10) une fois qu'il a été installé, ce qui élimine tout relâchement et assure une totale tension et en conséquence une excellente fixation, par pression et tension, des objets (12) (colis, caisses et similaires), déposés à l'intérieur du conteneur (7).

Au préalable, il est indispensable d'accrocher fermement les extrémités du "cliquet" (10) aux bandes latérales correspondantes (1), en les introduisant à travers les oeillets ou tunnels (3), tel qu'il est indiqué aux figures 7 et 8. Une fois les deux extrémités fixées à la bande latérale (1) au moyen des noeuds (10a), on procédera à l'armage précité en actionnant l'élément tendeur (11).

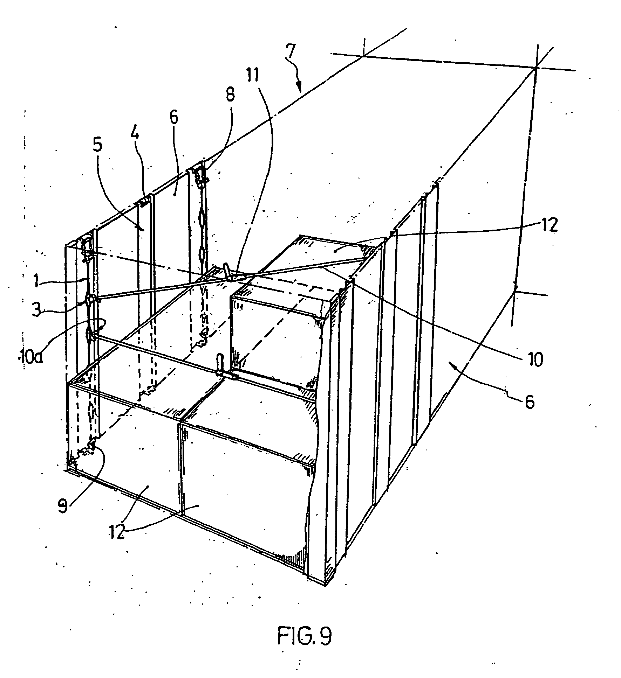

Une autre caractéristique essentielle de l'invention que nous décrivons est le fait que les "cliquets" pourront être disposés d'un côté à l'autre de l'intérieur du conteneur, toujours fixés à l'oeillet ou tunnel (3) correspondant, soit horizontalement par la partie supérieure, inférieure ou centrale, soit sur un plan incliné, avec plusieurs angles d'inclination, ou transversal, et en conséquence, indépendamment de la taille des colis de la cargaison (12) placés dans le conteneur, ceux-ci pourront toujours être fixés facilement et en toute sûreté. C'est précisément ce que montre la fig. 9 qui représente une vue schématisée de l'ensemble du conteneur.

Il faut également signaler que la possibilité de nouer les extrémités de la bande (1) au mousqueton (8) et à l'ancrage inférieur (4a), donne à l'ensemble un grand nombre de possibilités pour appliquer le même élément à des endroits de longueur différente, et assure donc un plus grand profit de l'espace interne.

Il faut aussi signaler, comme une variante de la réalisation, l'installation dans la partie inférieur de la bande (1) d'un crochet (13), représenté à la figure 6, pour fixation à l'ancrage inférieur (4a).

Une fois décrit l'objet de l'invention, il faut indiquer que toute variation dans les matériaux, les dimensions, l'aspect et la forme des différents composants du dispositif décrit ne comportera aucune altération de son essence, qui est résumée dans les revendications suivantes.

## Revendications

1. Dispositif pour l'arrimage de cargaisons à l'intérieur de conteneurs, du type de ceux qui comprennent des rubans fixés aux faces internes du conteneur pour l'immobilisation des cargaisons, **caractérisé** essentiellement en ce qu'il comprend :
- une série de bandes verticales (1), fixées à des ancrages (4, 4a) installés à cet effet à des points concrets des faces internes du conteneur, lesdites bandes verticales (1) étant constituées de deux rubans (2, 2a) d'une grande résistance à la traction, à l'usure et à l'action d'agents externes, fortement unis l'un à l'autre sur toute leur longueur, sauf sur des sections déterminées équidistantes qui définissent des ouvertures, à la manière d'un oeillet ou tunnels (3), pour l'introduction de rubans de même type, et
- des "cliquets" ou rubans (10) fixés aux oeillets ou tunnels (3) des bandes verticales (1) et disposés d'un côté à l'autre de l'intérieur du conteneur, soit dans le sens horizontal, soit sur un plan incliné, avec différents angles d'inclinaison, ou bien dans le sens transversal, pour assurer l'immobilisation des cargaisons (12) à l'intérieur du conteneur.

2. Dispositif pour l'arrimage de cargaisons à l'intérieur de conteneurs, selon la revendication précédente, **caractérisé en ce que** les bandes verticales (1) ont leurs extrémités arrondies (1a) pour faciliter leur passage à travers les oeillets ou tunnels (3) mentionnés des bandes verticales (1)

3. Dispositif pour l'arrimage de cargaisons à l'intérieur de conteneurs, selon les revendications précédentes, **caractérisé par**ce que sur l'extrémité supérieure de chacune des bandes verticales (1) est fixé un mousqueton (8) auquel la bande est convenablement nouée, de façon à ce que dit mousqueton (8) est fixé à l'ancrage supérieur (4) de l'intérieur du conteneur (9), tandis que sur l'ancrage inférieur (4a) du propre conteneur la bande (1) est fixée au moyen d'un noeud (9).

4. Dispositif pour l'arrimage de cargaisons à l'intérieur de conteneurs, selon les revendications précédentes, **caractérisé par**ce que sur les parties rentrantes (5) de la tôle ondulée (6) qui conforme les parois du conteneur (7), sont accrochés, par leurs extrémités supérieure et inférieure, les ancrages (4) et (4a) en forme de poignée, sur lesquels est fixée la propre bande (1) laquelle sera placée verticalement et dûment tendue.

5. Dispositif pour l'arrimage de cargaisons à l'intérieur de conteneurs, selon la première revendication, **caractérisé par**ce que les "cliquets" (10) sont constitués par une bande dont les caractéristiques physiques et mécaniques sont identiques à celles des bandes verticales (1) dans la partie centrale desquelles est située un tendeur (11) dont l'objet est d'exercer une forte traction sur la totalité du "cliquet" (10) une fois installé, ses deux extrémités (10a) étant nouées aux pertinents oeillets ou tunnels (3) des bandes verticales (1) opposées, en assurant et garantissant une fixation totale, par pression et tension, sur les colis (12).

## Claims

1. A device for stowing cargo inside container, of the type comprising straps fixed to the inner faces of the container in order to immobilise the cargo, **characterised** essentially in that it comprises:
a series of vertical bauds (1), fixed to anchorages (4, 4a) installed for this purpose at concrete points on the inner faces of the container, said vertical bands (1) being formed of two straps (2, 2a) of high tensile strength, wear resistance and resistance to the action of external agents, which are strongly joined to one another over their entire length, except for equidistant given sections which define openings, in the manner of an eyelet or tunnels (3), for the introduction of straps of the same type, and
"ratchets" or straps (10) fixed to the eyelets or tunnels (3) of the vertical bands (1) and arranged from one side of the interior of the container to the other, either in the horizontal direction, or on an inclined plane, with different angles of inclination, of alternatively in the transverse direction, in order to immobilise the cargo (12) within the container.

2. A device for stowing cargo within containers, in accordance with the preceding claim, **characterised in that** the vertical bands (1) have their ends (1a) rounded to facilitate passage through the eyelets or tunnels (3) mentioned of the vertical bands (1).

3. A device for stowing cargo within containers, in accordance with the preceding claims, **characterised in that** on the upper end of each of the vertical bands (1) there is fixed a carabiner (8) to which the band is suitably knotted, such that said carabiner (8) is fixed to the upper anchorage (4) of the interior of the container (7), whereas the band (1) is fixed by means of a knot (9) to the lower anchorage (4a) of the container proper.

4. A device for stowing cargo within containers, in accordance with the preceding claims, **characterised in that** on the recessed parts (5) of the corrugated metal sheet (6) which forms the walls of the container (7) there are attached, by their upper and lower ends, the anchorages (4) and (4a) in the form of a handle, on which is fixed the band (1) proper, which will be placed vertically and duly tensioned.

5. A device for stowing cargo within containers, in accordance with the first claim, **characterised in that** the `"ratchets" (10) are formed by a band, the physical and mechanical characteristics of which are identical to those of the vertical bands (1) in the central part of which is located a tension device (11), the aim of which is to exert a high degree of fraction on the entire "hatchet" (10) once installed, its two ends (10a) being knotted to the relevant eyelets or tunnels (3) of the opposing vertical bands (1), ensuring and guaranteeing total fixing, by pressure and tension, on the packages (12).

## Patentansprüche

1. Anordnung zum Befestigen einer Ladung im Innenraum eines Containers, der Art, welche an den Innenflächen des Containers befestigte Bänder für die Immobilisierung einer Ladung aufweist, im Wesentlichen **dadurch gekennzeichnet, dass** sie aufweist:
- eine Reihe vertikaler Gurte (1), die an zu diesem Zweck an bestimmten Punkten der Innenflächen des Containers vorgesehenen Verankerungen (4, 4a) befestigt sind, wobei die vertikalen Gurte (1) aus zwei Bändern (2, 2a) mit hoher Zugfestigkeit, Verschleißbeständigkeit und Widerstandsfähigkeit gegen Außeneinwirkungen gebildet sind, die miteinander auf der gesamten Länge stark verbunden sind, mit Ausnahme bestimmter, voneinander gleich beabstandeter Abschnitte, die Öffnungen in Form einer Öse oder eines Kanals (3) abgrenzen, um dort Bänder gleicher Art einzuführen, und
- "Sperren" oder Bänder (10), die an den Ösen oder Kanälen (3) der vertikalen Gurte (1) befestigt und von einer Seite zur anderen im Innenraum des Containers entweder in horizontaler Richtung oder in einer mit verschiedenen Neigungswinkeln geneigten Ebene oder auch in transversaler Richtung anbeordnet sind, um die Immobilisierung der Ladung (12) im Innenraum des Containers zu gewährleistet.

2. Anordnung zum Befestigen einer Ladung im Innenraum eines Containers gemäß dem vorausgegangenen Anspruch, **dadurch gekennzeichnet, dass** die Enden (1a) der vertikalen Gurte (1) abgerundet sind, um deren Durchführung durch die Ösen oder Kanäle (3) der vertikalen Gurte (1) zu erleichtern.

3. Anordnung zum Befestigen einer Ladung im Innenraum eines Containers gemäß den vorausgegangenen Ansprüchen, **dadurch gekennzeichnet, dass** an dem oberen Ende jedes vertikalen Gurts (1) ein Karabinerhaken (8) befestigt ist, an dem der Gurt entsprechend verknotet ist, auf eine solche Weise, dass der Karabinerhaken (8) an der oberen Verankerung (4) des Innenraum des Containers (7) befestigt ist, wohingegen der Gurt (1) an der unteren Verankerung (4a) dieses Containers mittels eines Knotens (9) befestigt ist.

4. Anordnung zum Befestigen einer Ladung im Innenraum eines Containers gemäß den vorausgegangenen Ansprüchen, **dadurch gekennzeichnet, dass** an den einspringenden Teilen (5) des Wellblechs (6), das die Wände des Containers (7) bildet, am oberen und unteren Ende die Verankerungen (4) und (4a) in Form eines Griffs festgehakt sind, an denen der eigentliche Gurt (1) befestigt ist, der senkrecht angeordnet und ordnungsgemäß gespannt wird.

5. Anordnung zum Befestigen einer Ladung im Innenraum eines Containers gemäß Anspruch 1, **dadurch gekennzeichnet, dass** die "Sperren" (10) aus einem Gurt gebildet sind, dessen physikalische und mechanische Eigenschaften zu denen der vertikalen Gurte (1) identisch sind, und in deren Mittelteil ein Spanner (11) angeordnet ist, dessen Aufgabe es ist, nach Anbringung einen starken Bug auf die gesamte "Sperre" (10) auszuüben, wobei die beiden Enden (10a) in den passenden Ösen oder Kanälen (3) der gegenüberliegenden vertikalen Gurte (1) verknotet sind, wobei eine vollständige Befestigung mittels Druck und Spannung auf die Frachtstücke (12) gewährleistet wird.
